# EUROPEAN PATENT SPECIFICATION

(11) **EP 4 125 012 B1**
(45) Date of publication and mention of the grant of the patent: **26.06.2024**
(21) Application number: 22186602.3
(22) Date of filing: 25.07.2022
(51) Int. Cl.: G06N 5/045, G06N 20/00

(54) **TRUST RELATED MANAGEMENT OF ARTIFICIAL INTELLIGENCE OR MACHINE LEARNING PIPELINES IN RELATION TO THE TRUSTWORTHINESS FACTOR EXPLAINABILITY**
VERTRAUENSBEDINGTES MANAGEMENT VON PIPELINES MIT KÜNSTLICHER INTELLIGENZ ODER MASCHINENLERNEN IN BEZUG AUF DIE VERTRAUENSWÜRDIGKEITSFAKTORERKLÄRBARKEIT
GESTION DE PIPELINES D'INTELLIGENCE ARTIFICIELLE OU D'APPRENTISSAGE AUTOMATIQUE LIÉE À LA CONFIANCE PAR RAPPORT À L'EXPLICABILITÉ DU FACTEUR DE FIABILITÉ

(30) Priority: 28.07.2021 WO PCT/EP2021/071153
(43) Date of publication of application: 01.02.2023
(73) Proprietor: Nokia Technologies Oy, 02610 Espoo (FI)
(72) Inventor: ALI-TOLPPA, Janne, Pirkkala (FI); SUBRAMANYA, Tejas, Munich (DE); GAJIC, Borislava, Unterhaching (DE)
(74) Representative: Nokia EPO representatives

(56) References cited:
- LI CHEN ET AL: "Trustworthy Deep Learning in 6G-Enabled Mass Autonomy: From Concept to Quality-of-Trust Key Performance Indicators", IEEE VEHICULAR TECHNOLOGY MAGAZINE, IEEE, US, vol. 15, no. 4, 30 September 2020 (2020-09-30), pages 112-121, XP011821410, ISSN: 1556-6072, DOI: 10.1109/MVT.2020.3017181 [retrieved on 2020-11-23]
- THILO SPINNER ET AL: "explAIner: A Visual Analytics Framework for Interactive and Explainable Machine Learning", ARXIV.ORG, CORNELL UNIVERSITY LIBRARY, 201 OLIN LIBRARY CORNELL UNIVERSITY ITHACA, NY 14853, 29 July 2019 (2019-07-29), XP081453046,

## Description

### Field

Various example embodiments relate to trust related management of artificial intelligence or machine learning pipelines in relation to the trustworthiness factor "explainability". More specifically, various example embodiments exemplarily relate to measures (including methods, apparatuses and computer program products) for realizing trust related management of artificial intelligence or machine learning pipelines in relation to the trustworthiness factor "explainability".

### Background

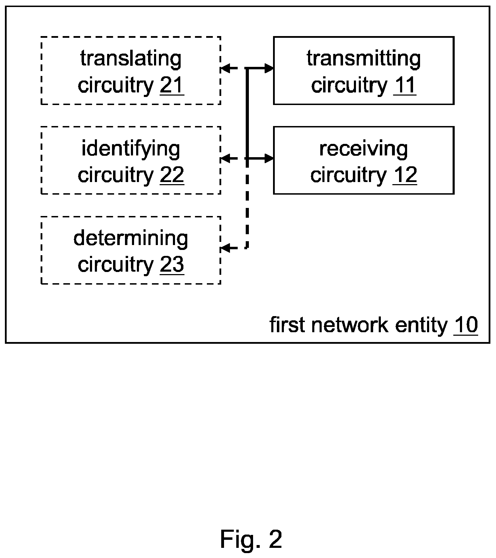

LI CHEN ET AL: "Trustworthy Deep Learning in 6G-Enabled Mass Autonomy: From Concept to Quality-of-Trust Key Performance Indicators", IEEE VEHICULAR TECHNOLOGY MAGAZINE, IEEE, US, vol. 15, no. 4, 30 September 2020, pages 112-121, XP011821410, ISSN: 1556-6072, DOI: 10.1109/MVT.2020.3017181, discloses the concept of trustworthy autonomy for 6G including essential elements such as how explainable AI (XAI) can generate the qualitative and quantitative modalities of trust. It also provides XAI test protocols for integration with radio resource management and associated key performance indicators, KPIs for trust. The proposed research will enable researchers to start testing existing AI optimization algorithms and develop new ones with the view that trust and transparency should be built from the design to the testing phase. Figure 2, page 115 discloses 6G network slicing and trust broker for different applications and end-user stakeholders. The trust broker translates Al algorithms into explainable outputs. Page 116 column 1, first paragraph discloses that complex service slice handover decisions between BSs can be explained by local explanations (e.g. the mobility and data demand of one service) but can also be explained by the overall handover policy that governs the process.

THILO SPINNER ET AL: "explAlner: A Visual Analytics Framework for interactive and Explainable Machine Learning", ARXIV.ORG, CORNELL UNIVERSITY LIBRARY, 201 OLIN LIBRARY CORNELL UNIVERSITY ITHACA, NY 14853, 29 July 2019, XP081453046, discloses a framework for interactive and explainable machine learning that enables users to understand machine learning models; diagnose model limitations using different AI explainable methods; as well as refine and optimize the models (see page 4, figure 2).

The present specification generally relates to artificial intelligence (AI) / machine learning (ML) model trustworthiness in particular for interoperable and multi-vendor environments.

An AI or ML pipeline helps to automate AI/ML workflows by splitting them into independent, reusable and modular components that can then be pipelined together to create a (AI/ML) model. An AI/ML pipeline is not a one-way flow, i.e., it is iterative, and every step is repeated to continuously improve the accuracy of the model and achieve a successful algorithm.

With AI/ML pipelining and the recent push for microservices architectures (e.g., container virtualization), each AI/ML workflow component is abstracted into an independent service that relevant stakeholders (e.g., data engineers, data scientists) can independently work on.

Besides, an AI/ML pipeline orchestrator can manage the AI/ML pipelines' lifecycle (e.g., commissioning, scaling, decommissioning).

For AI/ML systems to be widely accepted, they should be trustworthy in addition to their performance (e.g., accuracy).

International Organization for Standardization (ISO) / International Electrotechnical Commission (IEC) has published a technical report on 'Overview of trustworthiness in artificial intelligence'. Early efforts in the open-source community are also visible towards developing TAI frameworks/tools/libraries such as IBM AI360, Google Explainable AI and TensorFlow Responsible AI.

Three key TAI aspects described e.g. in the AI/ML research community are introduced below:
1. Fairness: Fairness is the process of understanding bias introduced in the data, and ensuring that the model provides equitable predictions across all demographic groups. It is important to apply fairness analysis throughout the entire AI/ML pipeline, making sure to continuously reevaluate the models from the perspective of fairness and inclusion. This is especially important when AI/ML is deployed in critical business processes that affect a wide range of end users.
2. Robustness (adversarial): Robustness of an AI/ML model refers to non-susceptibility of the model to adversarial threats, e.g. evasion attacks (involving carefully perturbing the input samples at test time to have them misclassified), poisoning (adversarial contamination of training data), extraction attacks (aiming to duplicate a machine learning model through query access to a target model), and inference attacks (determining if a sample of data was used in the training dataset of an AI/ML model).
3. Explainability: Explainability of an AI/ML model refers to unveiling of the black box model which just makes the prediction or gives the recommendation to the White box which actually gives the details of the underlying mechanism and pattern identified by the model for a particular dataset. There are multiple reasons why it is necessary to understand the underlying mechanism of an AI/ML model such as human readability, justifiability, interpretability and bias mitigation. There are three broad approaches to design an ML model to be explainable:
   a. Pre-modelling explainability - To understand or describe data used to develop AI/ML models, for example, using algorithms such as ProtoDash and Disentangled Inferred Prior VAE.
   b. Explainable modelling/Interpretable modelling - To develop more explainable AI/ML models, e.g., ML models with joint prediction and explanation or surrogate explainable models, for example, using algorithms such as Generalized Linear Rule Models and Teaching Explainable Decisions (TED).
   c. Post-modelling explainability - To extract explanations from pre-developed AI/ML models, for example, using algorithms such as ProtoDash, Contrastive Explanations Method, Profweight, LIME and SHAP.

   Furthermore, explanations can be local (i.e., explaining a single instance/prediction) or global (i.e., explaining the global AI/ML model structure/predictions, e.g., based on combining many local explanations of each prediction).
   Quantification of Explainability - Although it is ultimately the consumer who determines the quality of an explanation, the research community has proposed quantitative metrics as proxies for explainability. There are several metrics that measure explainability such as Faithfulness and Monotonicity.

One such AI explainability method is the Teaching Explanations for Decisions (TED), in which for each classification also the reason for the classification is trained and can be later retrieved during inference.

One use case for application of AI/ML models is ML-based predictive handover (HO).

Predictive handover utilizes ML for predicting the handover target and point in time.

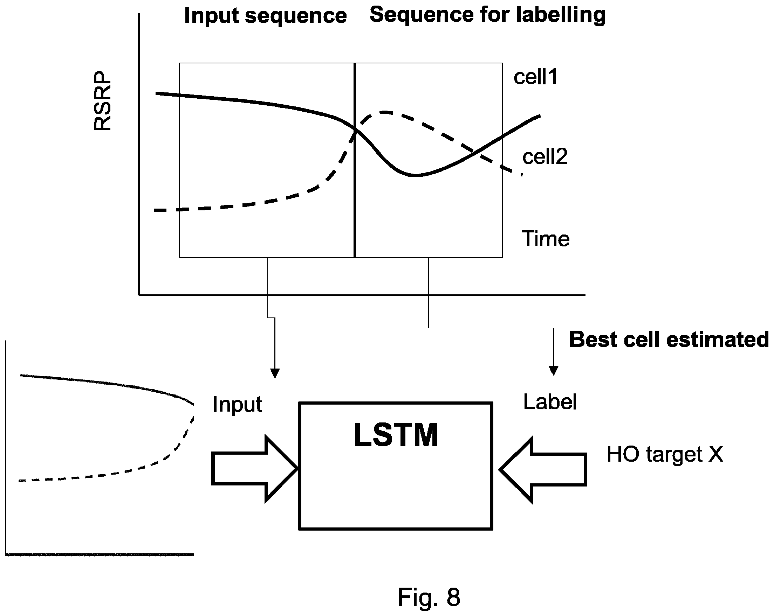

Figure 8 shows a schematic diagram of an example of a labeling process for predictive handover.

For prediction, the model needs a continuous stream of reference signal received power (RSRP) measurements, from specific cells, with certain measurement frequency. For training, the ML utilizes logged measurements from the specific cells with the same frequency as prediction. The training data is split into input and output frames. Input frame is N samples in time from K cells, and output frame is M samples after the input frame. The output frame is used to estimate the optimal handover target for the input, this process is called also as labeling and is illustrated in Figure 8. This allows the model to fingerprint the certain looking time series with the optimal handover decision (estimated by the labelling).

As an example for managing and monitoring explanations, in the following, predictive handover with TED is considered.

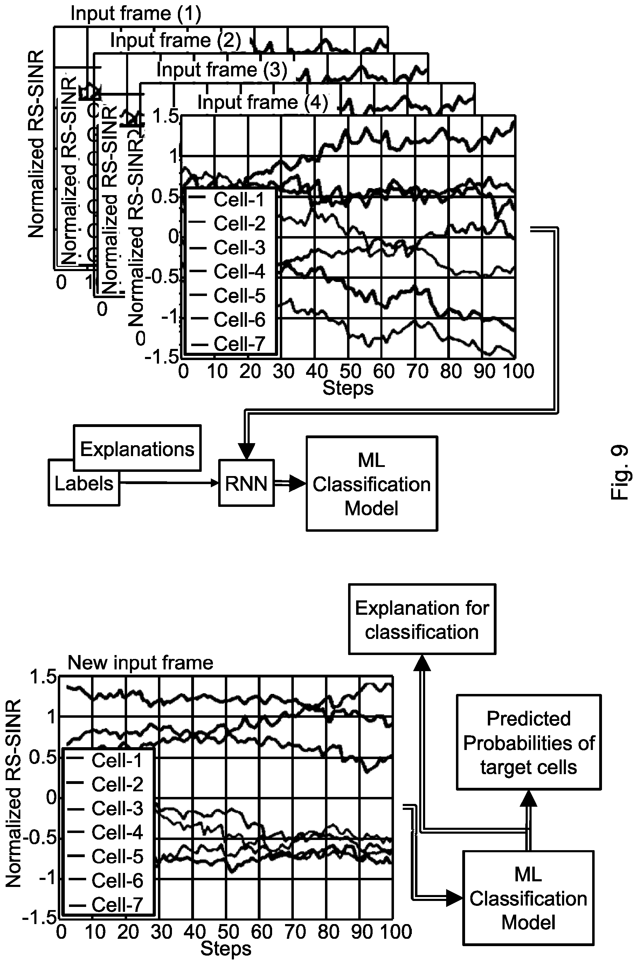

Figure 9 shows a schematic diagram of an example of a predictive handover processing with TED, and in particular illustrates predictive handover with explanation using TED.

In detail, in addition to the decision to stay in the current serving cell or handing over to another one, the model is trained with the explanation for that decision by adding an explanation for the decision in the classification. Note that one decision can be taken for many different reasons/explanations.

As an example, there can be the following decisions:
1. Stay in current serving cell,
2. Handover to neighbor 1,
3. Handover to neighbor 2,
4. Handover to neighbor 3.

Possible explanations for a decision are:
1. Serving cell remains the best,
2. Serving cell best, otherwise pingpong,
3. Handover to strongest candidate, gentle pathloss,
4. Handover to strongest candidate, abrupt pathloss,
5. Handover to not strongest, otherwise short stay,
6. Handover to the least worst (in a coverage hole situation).

Here, it would be important for operators to understand the reasons why handovers are executed or not executed by the algorithm, in order to understand the characteristics of the cell border in question and to improve the performance of the algorithm and the labelling. An example of this are so-called desperate handovers in case of coverage holes. The mobility failures in these situations are because of coverage issues and cannot be corrected with mobility optimization. Therefore, it would be important to be able to detect and understand these situations and to exclude the failures from mobility failure counts.

However, no measures for implementing a control and evaluation of the explainability aspect as a trustworthiness factor of AI/ML models are known.

Hence, the problem arises that control and evaluation of the explainability aspect as a trustworthiness factor of AI/ML models in particular for interoperable and multi-vendor environments is to be provided.

Hence, there is a need to provide for trust related management of artificial intelligence or machine learning pipelines in relation to the trustworthiness factor "explainability".

### Summary

Various example embodiments aim at addressing at least part of the above issues and/or problems and drawbacks.

Various aspects of example embodiments are set out in the appended claims.

According to an exemplary aspect, there is provided a method of a first network entity managing artificial intelligence or machine learning trustworthiness in a network, the method comprising transmitting a first artificial intelligence or machine learning trustworthiness related message towards a second network entity managing artificial intelligence or machine learning trustworthiness in an artificial intelligence or machine learning pipeline in said network, and receiving a second artificial intelligence or machine learning trustworthiness related message from said second network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided a method of a second network entity managing artificial intelligence or machine learning trustworthiness in an artificial intelligence or machine learning pipeline in a network, the method comprising receiving a first artificial intelligence or machine learning trustworthiness related message from a first network entity managing artificial intelligence or machine learning trustworthiness in said network, and transmitting a second artificial intelligence or machine learning trustworthiness related message towards said first network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided an apparatus of a first network entity managing artificial intelligence or machine learning trustworthiness in a network, the apparatus comprising transmitting circuitry configured to transmit a first artificial intelligence or machine learning trustworthiness related message towards a second network entity managing artificial intelligence or machine learning trustworthiness in an artificial intelligence or machine learning pipeline in said network, and receiving circuitry configured to receive a second artificial intelligence or machine learning trustworthiness related message from said second network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided an apparatus of a second network entity managing artificial intelligence or machine learning trustworthiness in an artificial intelligence or machine learning pipeline in a network, the apparatus comprising receiving circuitry configured to receive a first artificial intelligence or machine learning trustworthiness related message from a first network entity managing artificial intelligence or machine learning trustworthiness in said network, and transmitting circuitry configured to transmit a second artificial intelligence or machine learning trustworthiness related message towards said first network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided an apparatus of a first network entity managing artificial intelligence or machine learning trustworthiness in a network, the apparatus comprising at least one processor, at least one memory including computer program code, and at least one interface configured for communication with at least another apparatus, the at least one processor, with the at least one memory and the computer program code, being configured to cause the apparatus to perform transmitting a first artificial intelligence or machine learning trustworthiness related message towards a second network entity managing artificial intelligence or machine learning trustworthiness in an artificial intelligence or machine learning pipeline in said network, and receiving a second artificial intelligence or machine learning trustworthiness related message from said second network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided an apparatus of a second network entity managing artificial intelligence or machine learning trustworthiness in an artificial intelligence or machine learning pipeline in a network, the apparatus comprising at least one processor, at least one memory including computer program code, and at least one interface configured for communication with at least another apparatus, the at least one processor, with the at least one memory and the computer program code, being configured to cause the apparatus to perform receiving a first artificial intelligence or machine learning trustworthiness related message from a first network entity managing artificial intelligence or machine learning trustworthiness in said network, and transmitting a second artificial intelligence or machine learning trustworthiness related message towards said first network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient control and evaluation of AI/ML models in relation to the trustworthiness factor "explainability" to thereby solve at least part of the problems and drawbacks identified in relation to the prior art.

By way of example embodiments, there is provided trust related management of artificial intelligence or machine learning pipelines in relation to the trustworthiness factor explainability. More specifically, by way of example embodiments, there are provided measures and mechanisms for realizing trust related management of artificial intelligence or machine learning pipelines in relation to the trustworthiness factor explainability.

Thus, improvement is achieved by methods, apparatuses and computer program products enabling/realizing trust related management of artificial intelligence or machine learning pipelines in relation to the trustworthiness factor explainability.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a schematic diagram of a procedure according to example embodiments,
Figure 5 is a schematic diagram of a procedure according to example embodiments,
Figure 6 shows a schematic diagram of an example of a system environment with interfaces and signaling variants according to example embodiments,
Figure 7 shows a schematic diagram of signaling sequences according to example embodiments,
Figure 8 shows a schematic diagram of an example of a labeling process for predictive handover,
Figure 9 shows a schematic diagram of an example of a predictive handover processing with teaching explanations for decisions (TED),
Figure 10 shows a schematic diagram of signaling sequences according to example embodiments,
Figure 11 shows a schematic diagram of signaling sequences according to example embodiments,
Figure 12 shows a schematic diagram of signaling sequences according to example embodiments, and
Figure 13 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) trust related management of artificial intelligence or machine learning pipelines in relation to the trustworthiness factor explainability, and in particular measures and mechanisms for (enabling/realizing) explaining ML decisions in trustworthy AI frameworks.

A framework for TAI in cognitive autonomous networks (CAN) underlies example embodiments.

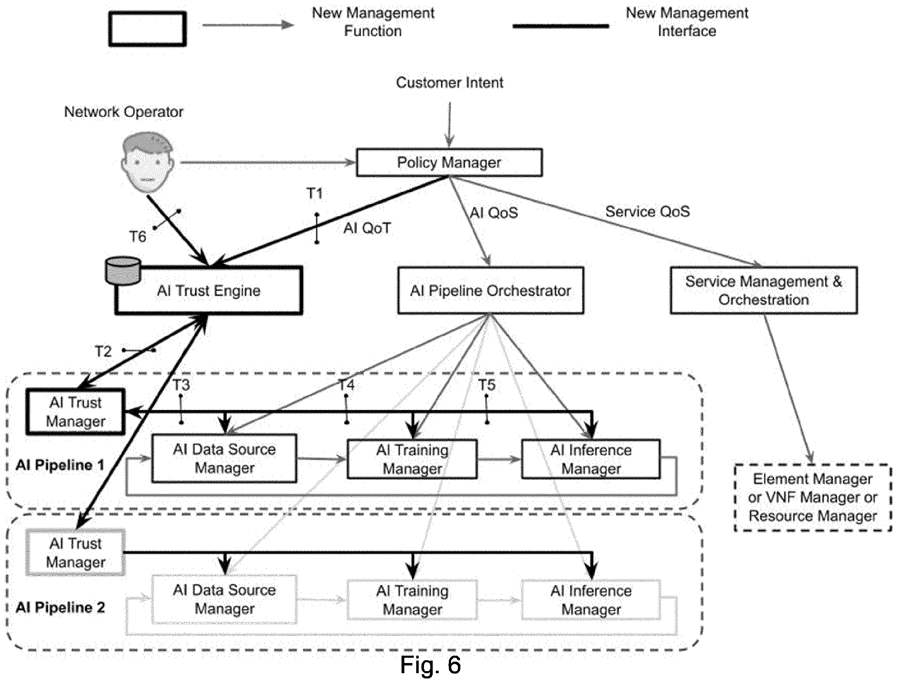

Figure 6 shows a schematic diagram of an example of a system environment with interfaces and signaling variants according to example embodiments, and in particular illustrates example details of the trustworthy artificial intelligence framework (TAIF) in CANs underlying example embodiments.

Such TAIF for CANs may be provided to facilitate the definition, configuration, monitoring and measuring of AI/ML model trustworthiness (i.e., fairness, explainability and robustness) for interoperable and multi-vendor environments. A service definition or the business/customer intent may include AI/ML trustworthiness requirements in addition to quality of service (QoS) requirements, and the TAIF is used to configure the requested AI/ML trustworthiness and to monitor and assure its fulfilment. The TAIF introduces two management functions, namely, a function entity named AI Trust Engine (one per management domain) and a function entity named AI Trust Manager (one per AI/ML pipeline). The TAIF further introduces six interfaces (named T1 to T6) that support interactions in the TAIF. According to the TAIF underlying example embodiments, the AI Trust Engine is center for managing all AI trustworthiness related things in the network, whereas the AI Trust Managers are use case and often vendor specific, with knowledge of the AI use case and how it is implemented.

Furthermore, the TAIF underlying example embodiments introduces a concept of AI quality of trustworthiness (AI QoT) (as seen over the T1 interface in Figure 6) to define AI/ML model trustworthiness in a unified way covering three factors, i.e., fairness, explainability and robustness, similar to how QoS is used for network performance.

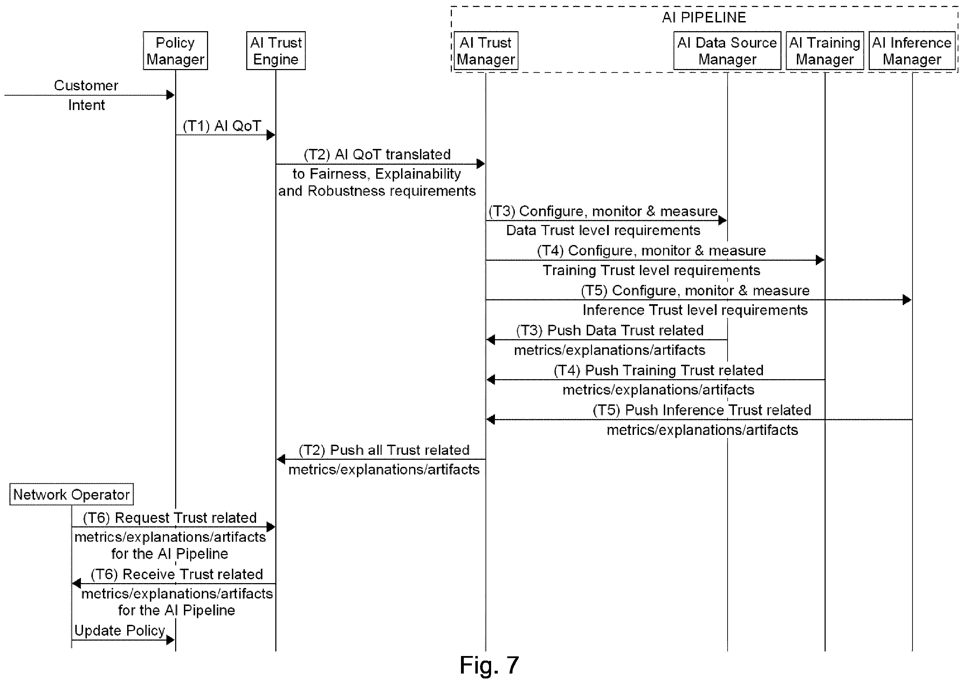

Figure 7 shows a schematic diagram of signaling sequences according to example embodiments, and in particular illustrates an exemplary generic workflow in the TAIF underlying example embodiments.

Once the Policy Manager receives an intent from a customer, it is translated into AI QoT intent/class identifier and sent to the AI Trust Engine over the T1 interface. The AI Trust Engine translates the AI QoT intent/class identifer into AI trustworthiness (i.e., fairness, robustness, and explainability) requirements and sends it to the AI Trust Manager of the AI pipeline over the T2 interface. The AI Trust Manager may configure, monitor, and measure AI trustworthiness requirements (i.e., trust mechanisms and trust metrics) for an AI Data Source Manager, an AI Training Manager and an AI Inference Manager (of a respective AI pipeline) over T3, T4 and T5 interfaces, respectively. The measured or collected trustworthy metrics/artifacts/explanations from the AI Data Source Manager, AI Training Manager and AI Inference Manager regarding the AI pipeline may be pushed to the AI Trust Manager over T3, T4 and T5 interfaces, respectively. The AI Trust Manager may push, over the T2 interface, all trustworthy metrics/artifacts/explanations of the AI pipeline to the AI Trust Engine, which may store the information in a trust knowledge database. Finally, the network operator can request and receive the trustworthy metrics/explanations/artifacts of an AI pipeline from the AI Trust Engine over the T6 interface. Based on the information retrieved, the Network Operator may decide to update the policy via the Policy Manager.

Here, in the TAIF underlying example embodiments, the operator needs methods for configuring the explainability requirements of ML-based network automation functions and for collecting and querying explanations as needed. This can be done by providing the QoT definitions via policies (Interface T1) or directly (Interface T6) to the AI Trust Engine. The AI Trust Engine will translate the requirement and determine the affected network automation functions (NAF) and corresponding AI pipelines and their respective AI Trust Managers.

In the TAIF underlying example embodiments, the AI Trust Manager is the use case and vendor specific manager, which knows the AI explainability capabilities of the NAF and how to configure it and collect the explanations. Since the AI Trust Manager is a vendor-specific management function, a network may contain AI Trust Managers from several different vendors.

Therefore, potentially required operations and notifications utilizing the T2 interface to effect and/or facilitate and/or prepare such configuration and reporting need to be specified and provided. In particular, the AI Trust Engine needs the AI Trust Managers to provide an interface for the explainability functionality to be able to operate therewith.

As an example, in case of predictive handover, it would be important to understand the reasons why handovers are executed or not executed by the algorithm, in order to understand the characteristics of the cell border in question and to improve the performance of the algorithm and the labelling. An example of this are so-called desperate handovers in case of coverage holes. The mobility failures in these situations are because of coverage issues and cannot be corrected with mobility optimization. Therefore, it would be important to be able to detect and understand these situations and to exclude the failures from mobility failure counts.

Hence, in brief, according to example embodiments, AI Trust Manager (which may be considered as a second network entity managing AI/ML trustworthiness in an AI/ML pipeline in a network) application programming interfaces (API) for AI/ML explainability are provided that allow the AI Trust Engine (which may be considered as a first network entity managing AI/ML trustworthiness in the network), over the T2 interface, to discover the AI explainability capabilities of the use case-specific CNF or AI pipeline, to configure the required AI explainability methods and/or the collection of AI/ML explanations.

In particular, according to example embodiments, the following AI Trust Manager APIs for AI/ML explainability are provided.
1. TAI Explainability Capability Discovery API (Request/Response) - It allows the AI Trust Engine, via T2 interface, to discover supported AI explainability methods.
2. TAI Explainability Configuration API (Request/Response) - It allows the AI Trust Engine, via T2 interface, to configure appropriate AI explainability method(s) to be used and how the explanations are to be collected and stored.
3. TAI Explainability Query API (Request/Response and Subscribe/Notify) - It allows the AI Trust Engine, via T2 interface, to query/request AI decision explanations from the AI Trust Manager.

Example embodiments are specified below in more detail.

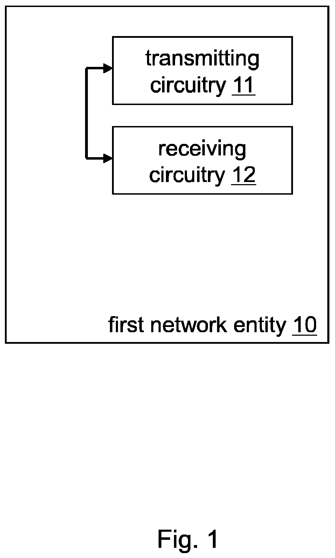

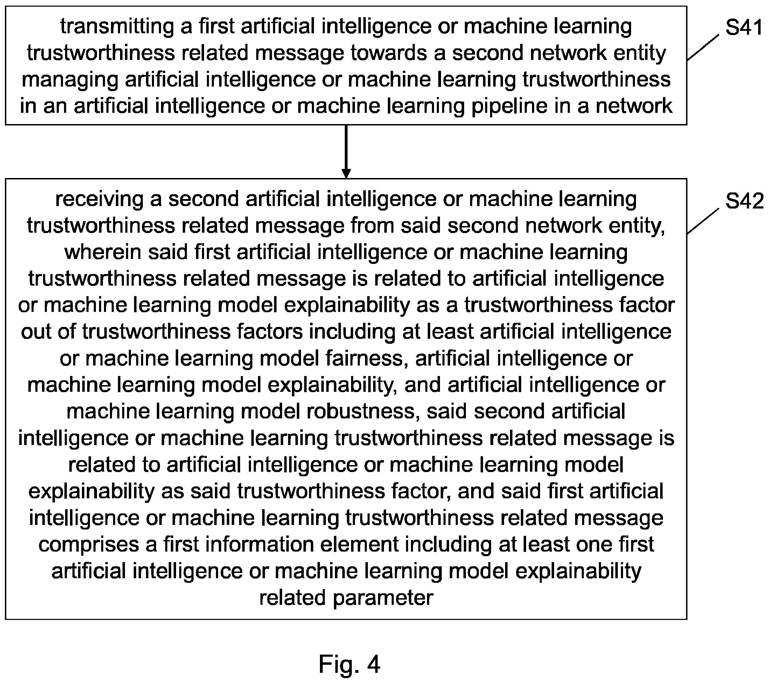

Figure 1 is a block diagram illustrating an apparatus according to example embodiments. The apparatus may be a first network entity 10 such as an AI Trust Engine (e.g. managing artificial intelligence or machine learning trustworthiness in a network) comprising a transmitting circuitry 11 and a receiving circuitry 12. The transmitting circuitry 11 transmits a first artificial intelligence or machine learning trustworthiness related message towards a second network entity managing artificial intelligence or machine learning trustworthiness in an artificial intelligence or machine learning pipeline in said network. The receiving circuitry 12 receives a second artificial intelligence or machine learning trustworthiness related message from said second network entity. Here, the first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness. Further, the second artificial intelligence or machine learning trustworthiness related message is related to artificial intelligence or machine learning model explainability as said trustworthiness factor. Still further, the first artificial intelligence or machine learning trustworthiness related message comprises a first information element including at least one first artificial intelligence or machine learning model explainability related parameter. Figure 4 is a schematic diagram of a procedure according to example embodiments. The apparatus according to Figure 1 may perform the method of Figure 4 but is not limited to this method. The method of Figure 4 may be performed by the apparatus of Figure 1 but is not limited to being performed by this apparatus.

As shown in Figure 4, a procedure according to example embodiments comprises an operation of transmitting (S41) a first artificial intelligence or machine learning trustworthiness related message towards a second network entity managing artificial intelligence or machine learning trustworthiness in an artificial intelligence or machine learning pipeline in said network, and an operation of receiving (S42) a second artificial intelligence or machine learning trustworthiness related message from said second network entity. Here, the first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness. Further, the second artificial intelligence or machine learning trustworthiness related message is related to artificial intelligence or machine learning model explainability as said trustworthiness factor. Still further, the first artificial intelligence or machine learning trustworthiness related message comprises a first information element including at least one first artificial intelligence or machine learning model explainability related parameter.

Figure 2 is a block diagram illustrating an apparatus according to example embodiments. In particular, Figure 2 illustrates a variation of the apparatus shown in Figure 1. The apparatus according to Figure 2 may thus further comprise a translating circuitry 21, an identifying circuitry 22, and a receiving circuitry 23.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 4, exemplary additional operations are given, which are inherently independent from each other as such. According to such variation, an exemplary method according to example embodiments may comprise an operation of translating an acquired artificial intelligence or machine learning quality of trustworthiness into requirements related to artificial intelligence or machine learning model explainability as said trustworthiness factor, and an operation of identifying said second network entity based on said acquired artificial intelligence or machine learning quality of trustworthiness. According to such example embodiments, said first artificial intelligence or machine learning trustworthiness related message is a trustworthiness explainability capability information request, and said second artificial intelligence or machine learning trustworthiness related message is a trustworthiness explainability capability information response, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes a list indicative of a cognitive network function scope, and said at least one second artificial intelligence or machine learning model explainability related parameter includes at least one of a list indicative of supported artificial intelligence or machine learning model explanation methods, a list indicative of supported artificial intelligence or machine learning model explainability metrics, and a list indicative of supported artificial intelligence or machine learning model explanation aggregation period lengths.

According to a variation of the procedure shown in Figure 4, exemplary additional operations are given, which are inherently independent from each other as such. According to such variation, an exemplary method according to example embodiments may comprise an operation of determining, based on acquired capability information with respect to artificial intelligence or machine learning model explainability as said trustworthiness factor, whether requirements related to artificial intelligence or machine learning model explainability as said trustworthiness factor can be satisfied. According to such example embodiments, said first artificial intelligence or machine learning trustworthiness related message is a trustworthiness explainability configuration request, and said second artificial intelligence or machine learning trustworthiness related message is a trustworthiness explainability configuration response.

According to further example embodiments, said at least one first artificial intelligence or machine learning model explainability related parameter includes at least one of a list indicative of cognitive network function instances within a cognitive network function scope of an artificial intelligence or machine learning model explanation collection job, state information indicative of activation or inactivation of said artificial intelligence or machine learning model explanation collection job, start time information indicative of when said artificial intelligence or machine learning model explanation collection job is started, stop time information indicative of when said artificial intelligence or machine learning model explanation collection job is stopped, aggregation period information indicative of an artificial intelligence or machine learning model explanation aggregation period length of said artificial intelligence or machine learning model explanation collection job, keeping time information indicative of for how long artificial intelligence or machine learning model explanations resulting from said artificial intelligence or machine learning model explanation collection job are to be stored, method information indicative of an artificial intelligence or machine learning model explanation method to be used for said artificial intelligence or machine learning model explanation collection job, and filter information indicative of at least one type of artificial intelligence or machine learning model explanations to be collected by said artificial intelligence or machine learning model explanation collection job.

According to a variation of the procedure shown in Figure 4, exemplary additional operations are given, which are inherently independent from each other as such. According to such variation, an exemplary method according to example embodiments may comprise an operation of determining said second network entity based on an acquired trustworthiness information demand with respect to artificial intelligence or machine learning model explainability as said trustworthiness factor. According to such example embodiments, said first artificial intelligence or machine learning trustworthiness related message is a trustworthiness explainability query request, and said second artificial intelligence or machine learning trustworthiness related message is a trustworthiness explainability query response, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes at least one of a list indicative of cognitive network function instances within a cognitive network function scope of an artificial intelligence or machine learning model explanation query, start time information indicative of a begin of a timeframe for which artificial intelligence or machine learning model explanations are queried with said artificial intelligence or machine learning model explanation query, and stop time information indicative of an end of said timeframe for which artificial intelligence or machine learning model explanations are queried with said artificial intelligence or machine learning model explanation query, and said at least one second artificial intelligence or machine learning model explainability related parameter includes at least one of time information indicative of when key performance indicators considered for an artificial intelligence or machine learning model explanation were reported, cognitive network function information indicative of at least one cognitive network function from which said key performance indicators considered for said artificial intelligence or machine learning model explanation were reported, and a list indicative of a plurality of decision classifications and a number of decisions per decision classification.

According to a variation of the procedure shown in Figure 4, exemplary additional operations are given, which are inherently independent from each other as such. According to such variation, an exemplary method according to example embodiments may comprise an operation of determining said second network entity based on an acquired trustworthiness information demand with respect to artificial intelligence or machine learning model explainability as said trustworthiness factor. According to such example embodiments, said first artificial intelligence or machine learning trustworthiness related message is a trustworthiness explainability subscription, and said second artificial intelligence or machine learning trustworthiness related message is a trustworthiness explainability notification, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes at least one of a list indicative of cognitive network function instances within a cognitive network function scope of an artificial intelligence or machine learning model explanation query, and filter information indicative of filter criteria for a subscription with respect to said artificial intelligence or machine learning model explanation query, and said at least one second artificial intelligence or machine learning model explainability related parameter includes at least one of time information indicative of when key performance indicators considered for an artificial intelligence or machine learning model explanation were reported, cognitive network function information indicative of at least one cognitive network function from which said key performance indicators considered for said artificial intelligence or machine learning model explanation were reported, and a list indicative of a plurality of decision classifications and a number of decisions per decision classification.

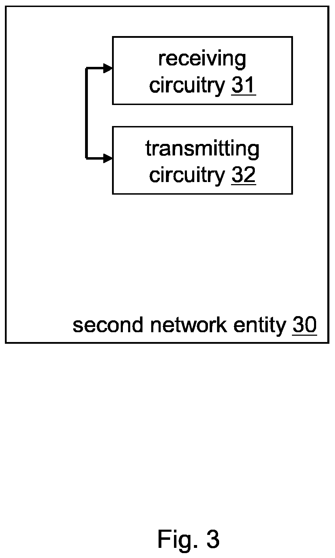

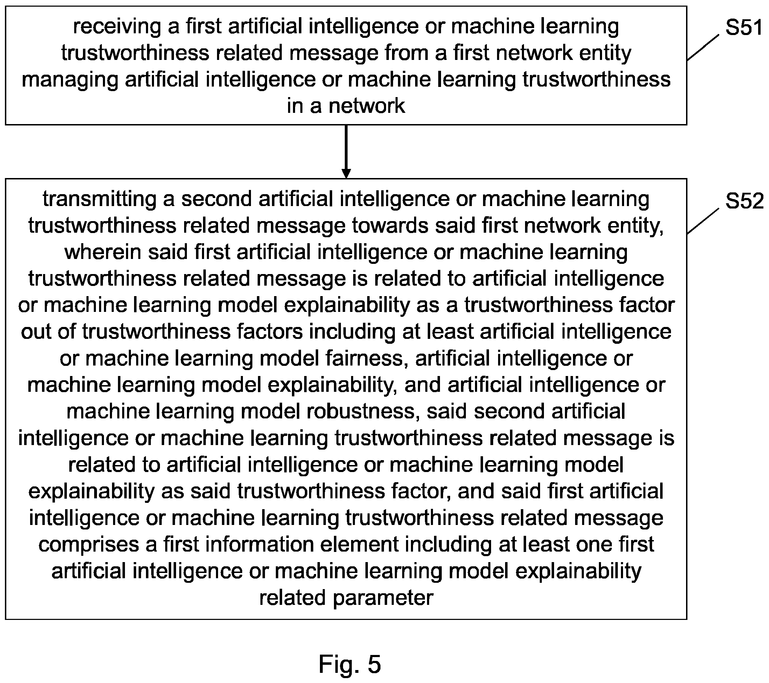

Figure 3 is a block diagram illustrating an apparatus according to example embodiments. The apparatus may be a second network entity 30 such as an AI Trust Manager (e.g. managing artificial intelligence or machine learning trustworthiness in an artificial intelligence or machine learning pipeline in a network) comprising a receiving circuitry 31 and a transmitting circuitry 32. The receiving circuitry 31 receives a first artificial intelligence or machine learning trustworthiness related message from a first network entity managing artificial intelligence or machine learning trustworthiness in said network. The transmitting circuitry 32 transmits a second artificial intelligence or machine learning trustworthiness related message towards said first network entity. Here, the first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness. Further, the second artificial intelligence or machine learning trustworthiness related message is related to artificial intelligence or machine learning model explainability as said trustworthiness factor. Still further, the first artificial intelligence or machine learning trustworthiness related message comprises a first information element including at least one first artificial intelligence or machine learning model explainability related parameter. Figure 5 is a schematic diagram of a procedure according to example embodiments. The apparatus according to Figure 3 may perform the method of Figure 5 but is not limited to this method. The method of Figure 5 may be performed by the apparatus of Figure 3 but is not limited to being performed by this apparatus.

As shown in Figure 5, a procedure according to example embodiments comprises an operation of receiving (S51) a first artificial intelligence or machine learning trustworthiness related message from a first network entity managing artificial intelligence or machine learning trustworthiness in said network, and an operation of transmitting (S52) a second artificial intelligence or machine learning trustworthiness related message towards said first network entity. Here, the first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness. Further, the second artificial intelligence or machine learning trustworthiness related message is related to artificial intelligence or machine learning model explainability as said trustworthiness factor. Still further, the first artificial intelligence or machine learning trustworthiness related message comprises a first information element including at least one first artificial intelligence or machine learning model explainability related parameter.

In an embodiment at least some of the functionalities of the apparatus shown in Figure 3 may be shared between two physically separate devices forming one operational entity. Therefore, the apparatus may be seen to depict the operational entity comprising one or more physically separate devices for executing at least some of the described processes.

According to further example embodiments, said first artificial intelligence or machine learning trustworthiness related message is a trustworthiness explainability capability information request, and said second artificial intelligence or machine learning trustworthiness related message is a trustworthiness explainability capability information response, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes a list indicative of a cognitive network function scope, and said at least one second artificial intelligence or machine learning model explainability related parameter includes at least one of a list indicative of supported artificial intelligence or machine learning model explanation methods, a list indicative of supported artificial intelligence or machine learning model explainability metrics, and a list indicative of supported artificial intelligence or machine learning model explanation aggregation period lengths.

According to further example embodiments, said first artificial intelligence or machine learning trustworthiness related message is a trustworthiness explainability configuration request, and said second artificial intelligence or machine learning trustworthiness related message is a trustworthiness explainability configuration response.

According to further example embodiments, said at least one first artificial intelligence or machine learning model explainability related parameter includes at least one of a list indicative of cognitive network function instances within a cognitive network function scope of an artificial intelligence or machine learning model explanation collection job, state information indicative of activation or inactivation of said artificial intelligence or machine learning model explanation collection job, start time information indicative of when said artificial intelligence or machine learning model explanation collection job is started, stop time information indicative of when said artificial intelligence or machine learning model explanation collection job is stopped, aggregation period information indicative of an artificial intelligence or machine learning model explanation aggregation period length of said artificial intelligence or machine learning model explanation collection job, keeping time information indicative of for how long artificial intelligence or machine learning model explanations resulting from said artificial intelligence or machine learning model explanation collection job are to be stored, method information indicative of an artificial intelligence or machine learning model explanation method to be used for said artificial intelligence or machine learning model explanation collection job, and filter information indicative of at least one type of artificial intelligence or machine learning model explanations to be collected by said artificial intelligence or machine learning model explanation collection job.

According to further example embodiments, said first artificial intelligence or machine learning trustworthiness related message is a trustworthiness explainability query request, and said second artificial intelligence or machine learning trustworthiness related message is a trustworthiness explainability query response, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes at least one of a list indicative of cognitive network function instances within a cognitive network function scope of an artificial intelligence or machine learning model explanation query, start time information indicative of a begin of a timeframe for which artificial intelligence or machine learning model explanations are queried with said artificial intelligence or machine learning model explanation query, and stop time information indicative of an end of said timeframe for which artificial intelligence or machine learning model explanations are queried with said artificial intelligence or machine learning model explanation query, and said at least one second artificial intelligence or machine learning model explainability related parameter includes at least one of time information indicative of when key performance indicators considered for an artificial intelligence or machine learning model explanation were reported, cognitive network function information indicative of at least one cognitive network function from which said key performance indicators considered for said artificial intelligence or machine learning model explanation were reported, and a list indicative of a plurality of decision classifications and a number of decisions per decision classification.

According to further example embodiments, said first artificial intelligence or machine learning trustworthiness related message is a trustworthiness explainability subscription, and said second artificial intelligence or machine learning trustworthiness related message is a trustworthiness explainability notification, and said second artificial intelligence or machine learning trustworthiness related message comprises a second information element including at least one second artificial intelligence or machine learning model explainability related parameter.

According to further example embodiments, said at least one first artificial intelligence or machine learning model explainability related parameter includes at least one of a list indicative of cognitive network function instances within a cognitive network function scope of an artificial intelligence or machine learning model explanation query, and filter information indicative of filter criteria for a subscription with respect to said artificial intelligence or machine learning model explanation query, and said at least one second artificial intelligence or machine learning model explainability related parameter includes at least one of time information indicative of when key performance indicators considered for an artificial intelligence or machine learning model explanation were reported, cognitive network function information indicative of at least one cognitive network function from which said key performance indicators considered for said artificial intelligence or machine learning model explanation were reported, and a list indicative of a plurality of decision classifications and a number of decisions per decision classification.

Example embodiments outlined and specified above are explained below in more specific terms.

In particular, Example embodiments outlined and specified above are explained below in terms specifically related to, as an example, the TED method to explain the decisions the ML-based predictive handover. However, it is noted that example embodiments are neither limited to ML-based predictive handover (being one example use case for AI/ML model application) nor to the TED method (being one example for an AI explainability method).

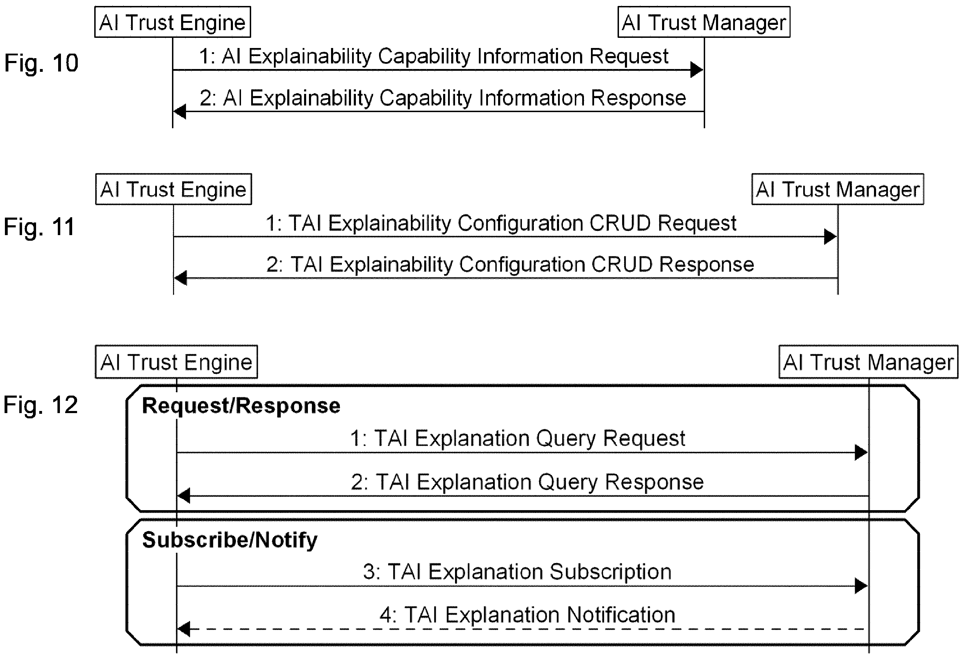

Figure 10 shows a schematic diagram of signaling sequences according to example embodiments, and in particular illustrates TAI explanation capability information discovery related communication between an AI Trust engine (as an example for a first network entity) and an AI Trust Manager (as an example for a second network entity).

Specifically, Figure 10 represents the TAI explainability capability information discovery API outlined above, which has two information elements (IE) and their parameters, namely the AI Explainability Capability Information Request (AIECIReq), and the AI Explainability Capability Information Response (AIECIResp).

According to example embodiments, the two IEs are implemented as shown in the tables below.

In particular, the AI Explainability Capability Information Request IE may be implemented as follows.

| **Parameter** | **Type** | **Description** |
|---|---|---|
| CNF Scope | List | Which CNF instances the capability is requested for |

On the other hand, the AI Explainability Capability Information Response IE may be implemented as follows.

| **Parameter** | **Type** | **Description** |
|---|---|---|
| Supported Methods | List of Strings | Which AI explainability methods are supported |
| Supported Explanation Metrics | List | Which explanation metrics are supported, e.g. faithfulness for self-explaining neural networks or monotonicity for contrastive explanations |
| Aggregation Granularity | Timestamp | List of supported aggregation period lengths for global explanations |
| Additional Information | Freetext | Freetext description of the capabilities |

A specific example of an Explainability Capability Information Response IE for predictive handover is shown in the table below. In this example, the predictive handover function is supporting only TED as a method for providing explanations. These are aggregated and available in granularity of one minute.

| **Parameter** | **Value** |
|---|---|
| Supported Methods | [TED] |
| Supported Explanation Metrics | |
| Aggregation Granularity | 1 minute |
| Additional Information | "Trained explanations for reasons to handover or to stay in the current serving cell" |

Figure 11 shows a schematic diagram of signaling sequences according to example embodiments, and in particular illustrates TAI explanation configuration related communication between an AI Trust engine (as an example for a first network entity) and an AI Trust Manager (as an example for a second network entity).

The TAI Explainability Configuration may utilize existing management interfaces for Creating, Reading, Updating and Deleting (CRUD) TAI Explanation Collection Job Information Elements (TAI-ECJ IEs) that configure the explanation collection, as shown in Figure 11.

According to example embodiments, the TAI-ECJ IE is implemented as shown in the table below.

| **Parameter** | **Type** | **Description** |
|---|---|---|
| ID | Integer | ID of the TAI-ECJ |
| CNF Scope | List | List of CNF instances that are within the scope of the TAI-ECJ |
| State | [ACTIVE/INACTIVE] | |
| Start Time | Timestamp | Time, when the collection is started. If omitted, the collection job is continuously active until End Time. |
| End Time | Timestamp | Time, when the collection is finished. If omitted, the collection job is active indefinitely. |
| Aggregation Period | Timestamp | The select global explanation aggregation period from the ones supported as indicated by the Explainability Capability Information Response attribute Global Explanation Aggregation Periods. The granularity should be a multiple of the granularity indicated in the capabilities. |
| Availability Time | Timestamp | How long the explanations need to be stored, especially if created during inference |
| Method | Enumeration | The used explanation method, or empty if none is explicitly configured. It should be one of the supported methods indicated in the Explainability Capability Information Response. |
| Method Specific Filter | Condition | A method specific filter for defining, which explanations are collected |

A specific example of a TAI-ECJ IE for configuring TED as explainability method for predictive handover is shown in the following table. In this example, two instances of predictive handover functions (with CNF IDs 1 and 3) are configured to be included in the explanation collection job. Since no start or end time are provided, the collection is active until configured otherwise. The aggregation period in this example is set to 5 minutes, which is a multiple of the minimum possible collection period and explanations for 5 minutes of handover decisions are aggregated into one explanation report. The reports are configured to be stored in the AI Trust Manager for at least 48 hours before the AI Trust Manager may delete them. TED is configured as the requested method of AI decision explanations and it has been indicated as supported in the Explainability Capability Information Response. Lastly, in this example, the TAI-ECJ is configured to collect everything except the default decision to "Stay in current serving cell" because "The Serving cell remains the strongest". This is the most common and also the least interesting decision by the model.

The TAI-ECJ is created by passing the TAI-ECJ IE in the following table in a TAI Explainability Configuration Create Request to the AI Trust Manager. The AI Trust Engine may at any point read, modify or delete the currently configured TAI-ECJs, including the new created one, with the corresponding TAI Explainability Configuration Read/Update/Delete requests.

| **Parameter** | **Value** |
|---|---|
| ID | 1 |
| CNF Scope | [1,3] |
| State | ACTIVE |
| Start Time | |
| End Time | |
| Aggregation Period | 5 minutes |
| Availability Time | 48 hours |
| Method | TED |
| Method Specific Filter | Collect all except "Stay in current serving cell" because "The Serving cell remains the strongest" |

Figure 12 shows a schematic diagram of signaling sequences according to example embodiments, and in particular illustrates TAI explanation query operations between an AI Trust engine (as an example for a first network entity) and an AI Trust Manager (as an example for a second network entity).

More specifically, Figure 12 illustrates the operations for querying explanations from the AI Trust Manager. Here, it is noted that both the Request-Response and Subscribe-Notify alternatives are shown. Of course, these alternatives are applicable independent from each other.

According to example embodiments, the two Request-Response related IEs are implemented as shown in the tables below.

In particular, the TAI Explanation Query Request IE may be implemented as follows.

| **Parameter** | **Type** | **Description** |
|---|---|---|
| TAI-ECJ ID | Integer | ID of the TAI Explanation Collection Job that is being queried |
| CNF Scope | List | Which CNF instances the query is requested for |
| Start Time | Timestamp | Start of the timeframe, where the explanations are requested |
| End Time | Timestamp | End of the timeframe, where the explanations are requested |

On the other hand, the TAI Explanation Query Response may be implemented as a list of TAI Explanation Query Response IEs as follows.

| **Parameter** | **Type** | **Description** |
|---|---|---|
| Time | Timestamp | When the explanation KPIs were reported |
| CNF ID | Integer | Reporting CNF |
| Counters | List of ExplanationCounter | See table below |

The parameter "ExplanationCounter" utilized in the table above may be implemented as illustrated in the table below.

| **Parameter** | **Type** | **Description** |
|---|---|---|
| Decision ID | Integer | ID of a classification |
| Explanation ID | Integer | ID of the explanation for the classification |
| Count | Integer | Count of times the classification was given for the provided explanation |

According to example embodiments, the two Subscribe-Notify related IEs are implemented as shown in the tables below.

In the Subscribe-Notify method, the AI Trust Engine can subscribe to receive explanation notifications, when they are created by the AI Trust Manager, with a TAI Explanation Subscription IE. The TAI Explanation Subscription IE may be implemented as follows. Here, a CNF Scope and an additional filter can be given in the subscription.

| **Parameter** | **Type** | **Description** |
|---|---|---|
| TAI-ECJ ID | Integer | ID of the TAI Explanation Collection Job that is being queried |
| CNF Scope | List | Which CNF instances the query is requested for |
| Filter | Condition | An additional filter criteria for subscribed explanations |

On the other hand, the TAI Explanation Notification may be implemented as a list of TAI Explanation Query Response IEs as follows (i.e., similar to a TAI Explanation Query Response).

| **Parameter** | **Type** | **Description** |
|---|---|---|
| Time | Timestamp | When the explanation KPIs were reported |
| CNF ID | Integer | Reporting CNF |
| Counters | List of ExplanationCounter | See table below |

Here, again, the parameter "ExplanationCounter" utilized in the table above may be implemented as illustrated in the table below.

| **Parameter** | **Type** | **Description** |
|---|---|---|
| Decision ID | Integer | ID of a classification |
| Explanation ID | Integer | ID of the explanation for the classification |
| Count | Integer | Count of times the classification was given for the provided explanation |

A specific example of the TAI Global Explanation Query Request for the predictive handover is given in the table below. In this query, on the explanations of one of the predictive handover functions configured in the TAI-ECJ (CNF ID 1) are queried.

| **Parameter** | **Value** |
|---|---|
| TAI-ECJ ID | 1 |
| CNF Scope | 1 |
| Start Time | |
| End Time | |

Since no start or end time are given, all explanations stored in the AI Trust Manager for CNF ID 1 are returned. An example snippet of the returned list of TAI Explanation Query Response Elements is shown in the table below. Since the aggregation period was configured to 5 minutes in the TAI-ECJ, a value is returned for every 5 minutes. Only one CNF (with an ID 1) was included in the query.

| **Time** | **CNF ID** | **Counter** |
|---|---|---|
| 27.5.2021 | 1 | ExplanationCouterList_1 |
| 15:20 | | |
| 27.5.2021 | 1 | ExplanationCouterList_2 |
| 15:25 | | |
| 27.5.2021 | 1 | ExplanationCouterList_3 |
| 15:30 | | |

For each row, a list of Explanation Counter IEs is returned. An example of such a list is shown in the table below. Here for each tuple of a decision and an explanation for why it was taken, a count is given, how many times this tuple did occur in the aggregation period of 5 minutes. It is noted that the available decisions and explanations are an enumeration as introduced above, i.e., example decisions 1 to 4 and example explanations 1 to 6. It is further noted that a same explanation may apply to different decisions, or same decision may be made for different reasons/explanations. For brevity, the complete list of Explanation Counters is not presented, and the missing value may also be assumed as count of zero.

| **Decision ID** | **Explanation ID** | **Count** |
|---|---|---|
| 1 (Stay in current serving cell) | 1 (Serving cell remains the best) | 1080 |
| 1 (Stay in current serving cell) | 2 (Serving cell best, otherwise pingpong) | 28 |
| 2 (Handover to neighbor 1) | 3 (Handover to strongest candidate, gentle pathloss) | 12 |
| 2 (Handover to neighbor 1) | 4 (Handover to strongest candidate, abrupt pathloss) | 0 |
| 2 (Handover to neighbor 1) | 5 (Handover to not strongest, otherwise short stay) | 0 |
| 3 (Handover to neighbor 2) | 3 (Handover to strongest candidate, gentle pathloss) | 38 |
| 3 (Handover to neighbor 2) | 4 (Handover to strongest candidate, abrupt pathloss) | 12 |
| 3 (Handover to neighbor 2) | 6 (Handover to the least worst) | 6 |

Consequently, according to example embodiments, the TAI Framework is advantageously enabled to configure how explanations need to be provided for decisions made by AI pipelines and CNFs and to query those explanations.

In case of the specific predictive handover example, the operator or the vendor of the predictive handover function may use the provided explanations to understand how the predictive handover function behaves for a given cell boundary, and why, which can be used to further optimize the performance. For example, the operator may discover that a large part of Radio Link Failures (RLF) during a handover may be because of coverage issues and there was no good target candidate to handover to (so-called desperate handover), corresponding to explanation ID 6 in the specific example above. Such problem may not be solved by optimizing the mobility behavior, but requires re-planning and optimization of the network coverage.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

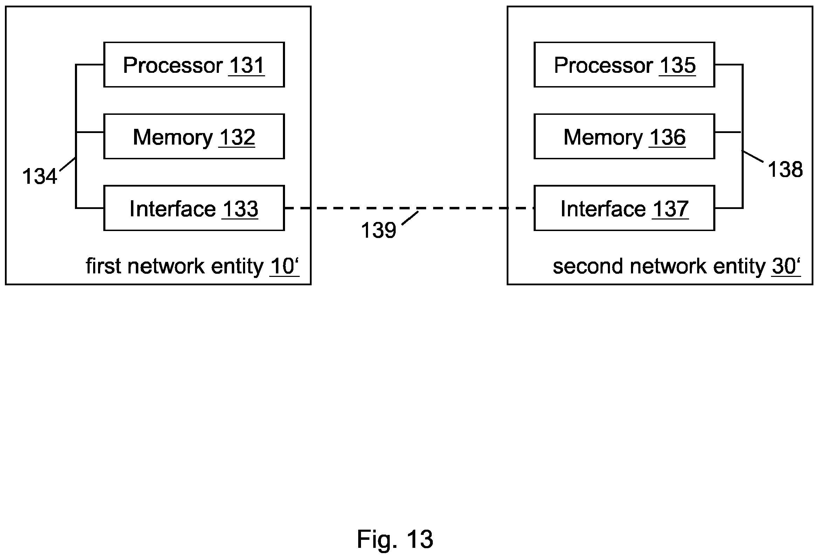

In Figure 13, an alternative illustration of apparatuses according to example embodiments is depicted. As indicated in Figure 13, according to example embodiments, the apparatus (first network entity) 10' (corresponding to the first network entity 10) comprises a processor 131, a memory 132 and an interface 133, which are connected by a bus 134 or the like. Further, according to example embodiments, the apparatus (second network entity) 30' (corresponding to the second network entity 30) comprises a processor 135, a memory 136 and an interface 137, which are connected by a bus 138 or the like, and the apparatuses may be connected via link 139, respectively.

The processor 131/135 and/or the interface 133/137 may also include a modem or the like to facilitate communication over a (hardwire or wireless) link, respectively. The interface 133/137 may include a suitable transceiver coupled to one or more antennas or communication means for (hardwire or wireless) communications with the linked or connected device(s), respectively. The interface 133/137 is generally configured to communicate with at least one other apparatus, i.e. the interface thereof.

The memory 132/136 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the first network entity 10 (e.g. managing artificial intelligence or machine learning trustworthiness in a network) comprises at least one processor 131, at least one memory 132 including computer program code, and at least one interface 133 configured for communication with at least another apparatus. The processor (i.e. the at least one processor 131, with the at least one memory 132 and the computer program code) is configured to perform transmitting a first artificial intelligence or machine learning trustworthiness related message towards a second network entity managing artificial intelligence or machine learning trustworthiness in an artificial intelligence or machine learning pipeline in said network (thus the apparatus comprising corresponding means for transmitting), and to perform receiving a second artificial intelligence or machine learning trustworthiness related message from said second network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter (thus the apparatus comprising corresponding means for receiving).

According to example embodiments, an apparatus representing the second network entity 10 (e.g. managing artificial intelligence or machine learning trustworthiness in an artificial intelligence or machine learning pipeline in a network) comprises at least one processor 135, at least one memory 136 including computer program code, and at least one interface 137 configured for communication with at least another apparatus. The processor (i.e. the at least one processor 135, with the at least one memory 136 and the computer program code) is configured to perform receiving a first artificial intelligence or machine learning trustworthiness related message from a first network entity managing artificial intelligence or machine learning trustworthiness in said network (thus the apparatus comprising corresponding means for receiving), and to perform transmitting a second artificial intelligence or machine learning trustworthiness related message towards said first network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter (thus the apparatus comprising corresponding means for transmitting).

For further details regarding the operability/functionality of the individual apparatuses, reference is made to the above description in connection with any one of Figures 1 to 12, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for trust related management of artificial intelligence or machine learning pipelines in relation to the trustworthiness factor explainability. Such measures exemplarily comprise, at a first network entity managing artificial intelligence or machine learning trustworthiness in a network, transmitting a first artificial intelligence or machine learning trustworthiness related message towards a second network entity managing artificial intelligence or machine learning trustworthiness in an artificial intelligence or machine learning pipeline in said network, and receiving a second artificial intelligence or machine learning trustworthiness related message from said second network entity, wherein said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness, said second artificial intelligence or machine learning trustworthiness related message is related to artificial intelligence or machine learning model explainability as said trustworthiness factor, and said first artificial intelligence or machine learning trustworthiness related message comprises a first information element including at least one first artificial intelligence or machine learning model explainability related parameter.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the claims.

### List of acronyms and abbreviations

- 3GPP: Third Generation Partnership Project
- AI: artificial intelligence
- AI: QoT AI quality of trustworthiness
- API: application programming interface
- AV: autonomous vehicle
- CAN: cognitive autonomous network
- CNF: cognitive network function
- CRUD: Creating, Reading, Updating and Deleting
- HLEG: High Level Expert Group
- HO: handover
- IE: information element
- IEC: International Electrotechnical Commission
- ISO: International Organization for Standardization
- MANO: management and orchestration
- ML: machine learning
- NAF: network automation function
- QCI: QoS Class Identifier
- QoE: quality of experience
- QoS: quality of service
- QoT: quality of trustworthiness
- RLF: Radio Link Failure
- RNN: Recurrent Neural Network
- RSRP: reference signal received power
- TAI: trustworthy artificial intelligence
- TAIF: trustworthy artificial intelligence framework
- TAI-ECJ: TAI Explanation Collection Job
- TED: Teaching Explainable Decisions, Teaching Explanations for Decisions
- VNF: virtual network function

## Claims

1. An apparatus of a first network entity managing artificial intelligence or machine learning trustworthiness in a network, the apparatus comprising
transmitting circuitry configured to transmit a first artificial intelligence or machine learning trustworthiness related message towards a second network entity managing artificial intelligence or machine learning trustworthiness in an artificial intelligence or machine learning pipeline in said network, and
receiving circuitry configured to receive a second artificial intelligence or machine learning trustworthiness related message from said second network entity, wherein
said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness,
said second artificial intelligence or machine learning trustworthiness related message is related to artificial intelligence or machine learning model explainability as said trustworthiness factor, and
said first artificial intelligence or machine learning trustworthiness related message comprises a first information element including at least one first artificial intelligence or machine learning model explainability related parameter.

2. The apparatus according to claim 1, further comprising
translating circuitry configured to translate an acquired artificial intelligence or machine learning quality of trustworthiness into requirements related to artificial intelligence or machine learning model explainability as said trustworthiness factor, and
identifying circuitry configured to identify said second network entity based on said acquired artificial intelligence or machine learning quality of trustworthiness, wherein
said first artificial intelligence or machine learning trustworthiness related message is a trustworthiness explainability capability information request, and
said second artificial intelligence or machine learning trustworthiness related message is a trustworthiness explainability capability information response, and
said second artificial intelligence or machine learning trustworthiness related message comprises a second information element including at least one second artificial intelligence or machine learning model explainability related parameter.

3. The apparatus according to claim 2, wherein
said at least one first artificial intelligence or machine learning model explainability related parameter includes a list indicative of a cognitive network function scope, and
said at least one second artificial intelligence or machine learning model explainability related parameter includes at least one of
a list indicative of supported artificial intelligence or machine learning model explanation methods,
a list indicative of supported artificial intelligence or machine learning model explainability metrics, and
a list indicative of supported artificial intelligence or machine learning model explanation aggregation period lengths.

4. The apparatus according to claim 1, further comprising
determining circuitry configured to determine, based on acquired capability information with respect to artificial intelligence or machine learning model explainability as said trustworthiness factor, whether requirements related to artificial intelligence or machine learning model explainability as said trustworthiness factor can be satisfied, wherein
said first artificial intelligence or machine learning trustworthiness related message is a trustworthiness explainability configuration request, and
said second artificial intelligence or machine learning trustworthiness related message is a trustworthiness explainability configuration response.

5. The apparatus according to claim 4, wherein
said at least one first artificial intelligence or machine learning model explainability related parameter includes at least one of
a list indicative of cognitive network function instances within a cognitive network function scope of an artificial intelligence or machine learning model explanation collection job,
state information indicative of activation or inactivation of said artificial intelligence or machine learning model explanation collection job,
start time information indicative of when said artificial intelligence or machine learning model explanation collection job is started,
stop time information indicative of when said artificial intelligence or machine learning model explanation collection job is stopped,
aggregation period information indicative of an artificial intelligence or machine learning model explanation aggregation period length of said artificial intelligence or machine learning model explanation collection job,
keeping time information indicative of for how long artificial intelligence or machine learning model explanations resulting from said artificial intelligence or machine learning model explanation collection job are to be stored,
method information indicative of an artificial intelligence or machine learning model explanation method to be used for said artificial intelligence or machine learning model explanation collection job, and
filter information indicative of at least one type of artificial intelligence or machine learning model explanations to be collected by said artificial intelligence or machine learning model explanation collection job.

6. The apparatus according claim 1, further comprising
determining circuitry configured to determine said second network entity based on an acquired trustworthiness information demand with respect to artificial intelligence or machine learning model explainability as said trustworthiness factor, wherein
said first artificial intelligence or machine learning trustworthiness related message is a trustworthiness explainability query request, and
said second artificial intelligence or machine learning trustworthiness related message is a trustworthiness explainability query response, and
said second artificial intelligence or machine learning trustworthiness related message comprises a second information element including at least one second artificial intelligence or machine learning model explainability related parameter.

7. The apparatus according to claim 6, wherein
said at least one first artificial intelligence or machine learning model explainability related parameter includes at least one of
a list indicative of cognitive network function instances within a cognitive network function scope of an artificial intelligence or machine learning model explanation query,
start time information indicative of a begin of a timeframe for which artificial intelligence or machine learning model explanations are queried with said artificial intelligence or machine learning model explanation query, and
stop time information indicative of an end of said timeframe for which artificial intelligence or machine learning model explanations are queried with said artificial intelligence or machine learning model explanation query, and
said at least one second artificial intelligence or machine learning model explainability related parameter includes at least one of
time information indicative of when key performance indicators considered for an artificial intelligence or machine learning model explanation were reported,
cognitive network function information indicative of at least one cognitive network function from which said key performance indicators considered for said artificial intelligence or machine learning model explanation were reported, and
a list indicative of a plurality of decision classifications and a number of decisions per decision classification.

8. The apparatus according claim 1, further comprising
determining circuitry configured to determine said second network entity based on an acquired trustworthiness information demand with respect to artificial intelligence or machine learning model explainability as said trustworthiness factor, wherein
said first artificial intelligence or machine learning trustworthiness related message is a trustworthiness explainability subscription, and
said second artificial intelligence or machine learning trustworthiness related message is a trustworthiness explainability notification, and
said second artificial intelligence or machine learning trustworthiness related message comprises a second information element including at least one second artificial intelligence or machine learning model explainability related parameter.

9. The apparatus according to claim 8, wherein
said at least one first artificial intelligence or machine learning model explainability related parameter includes at least one of
a list indicative of cognitive network function instances within a cognitive network function scope of an artificial intelligence or machine learning model explanation query, and
filter information indicative of filter criteria for a subscription with respect to said artificial intelligence or machine learning model explanation query, and
said at least one second artificial intelligence or machine learning model explainability related parameter includes at least one of
time information indicative of when key performance indicators considered for an artificial intelligence or machine learning model explanation were reported,
cognitive network function information indicative of at least one cognitive network function from which said key performance indicators considered for said artificial intelligence or machine learning model explanation were reported, and
a list indicative of a plurality of decision classifications and a number of decisions per decision classification.

10. An apparatus of a second network entity managing artificial intelligence or machine learning trustworthiness in an artificial intelligence or machine learning pipeline in a network, the apparatus comprising
receiving circuitry configured to receive a first artificial intelligence or machine learning trustworthiness related message from a first network entity managing artificial intelligence or machine learning trustworthiness in said network, and
transmitting circuitry configured to transmit a second artificial intelligence or machine learning trustworthiness related message towards said first network entity, wherein
said first artificial intelligence or machine learning trustworthiness related message is related to artificial intelligence or machine learning model explainability as a trustworthiness factor out of trustworthiness factors including at least artificial intelligence or machine learning model fairness, artificial intelligence or machine learning model explainability, and artificial intelligence or machine learning model robustness,
said second artificial intelligence or machine learning trustworthiness related message is related to artificial intelligence or machine learning model explainability as said trustworthiness factor, and
said first artificial intelligence or machine learning trustworthiness related message comprises a first information element including at least one first artificial intelligence or machine learning model explainability related parameter.

11. The apparatus according to claim 10, wherein
said first artificial intelligence or machine learning trustworthiness related message is a trustworthiness explainability capability information request, and
said second artificial intelligence or machine learning trustworthiness related message is a trustworthiness explainability capability information response, and
said second artificial intelligence or machine learning trustworthiness related message comprises a second information element including at least one second artificial intelligence or machine learning model explainability related parameter.

12. The apparatus according to claim 10, wherein
said first artificial intelligence or machine learning trustworthiness related message is a trustworthiness explainability configuration request, and
said second artificial intelligence or machine learning trustworthiness related message is a trustworthiness explainability configuration response.

13. The apparatus according claim 10, wherein
said first artificial intelligence or machine learning trustworthiness related message is a trustworthiness explainability query request, and
said second artificial intelligence or machine learning trustworthiness related message is a trustworthiness explainability query response, and
said second artificial intelligence or machine learning trustworthiness related message comprises a second information element including at least one second artificial intelligence or machine learning model explainability related parameter.

14. The apparatus according claim 10, wherein
said first artificial intelligence or machine learning trustworthiness related message is a trustworthiness explainability subscription, and
said second artificial intelligence or machine learning trustworthiness related message is a trustworthiness explainability notification, and
said second artificial intelligence or machine learning trustworthiness related message comprises a second information element including at least one second artificial intelligence or machine learning model explainability related parameter.

## Patentansprüche

1. Vorrichtung einer ersten Netzwerkentität, die eine Vertrauenswürdigkeit von künstlicher Intelligenz oder Maschinenlernen in einem Netzwerk verwaltet, wobei die Vorrichtung Folgendes umfasst
eine Übertragungsschaltung, die dazu ausgelegt ist, eine erste Nachricht, die sich auf eine Vertrauenswürdigkeit von künstlicher Intelligenz oder Maschinenlernen bezieht, zu einer zweiten Netzwerkentität zu übertragen, die eine Vertrauenswürdigkeit von künstlicher Intelligenz oder Maschinenlernen in einer Pipeline für künstliche Intelligenz oder Maschinenlernen in dem Netzwerk verwaltet, und
eine Empfangsschaltung, die dazu ausgelegt ist, von der zweiten Netzwerkentität eine zweite Nachricht zu empfangen, die sich auf eine Vertrauenswürdigkeit von künstlicher Intelligenz oder Maschinenlernen bezieht, wobei
sich die erste Nachricht über eine Vertrauenswürdigkeit von künstlicher Intelligenz oder Maschinenlernen auf eine Modellerklärbarkeit von künstlicher Intelligenz oder Maschinenlernen als einen Vertrauenswürdigkeitsfaktor von Vertrauenswürdigkeitsfaktoren bezieht, die mindestens eine Modellfairness für künstliche Intelligenz oder Maschinenlernen, eine Modellerklärbarkeit für künstliche Intelligenz oder Maschinenlernen und eine Modellrobustheit für künstliche Intelligenz oder Maschinenlernen beinhalten,
sich die zweite Nachricht über eine Vertrauenswürdigkeit von künstlicher Intelligenz oder Maschinenlernen auf eine Modellerklärbarkeit von künstlicher Intelligenz oder Maschinenlernen als den Vertrauenswürdigkeitsfaktor bezieht, und
die erste Nachricht über eine Vertrauenswürdigkeit von künstlicher Intelligenz oder Maschinenlernen ein erstes Informationselement umfasst, das mindestens einen ersten Parameter beinhaltet, der sich auf die Modellerklärbarkeit für künstliche Intelligenz oder Maschinenlernen bezieht.

2. Vorrichtung nach Anspruch 1, die ferner Folgendes umfasst
eine Übersetzungsschaltung, die dazu ausgelegt ist, eine erfasste Qualität einer Vertrauenswürdigkeit von künstlicher Intelligenz oder Maschinenlernen in Anforderungen zu übersetzen, die sich auf eine Modellerklärbarkeit für künstliche Intelligenz oder Maschinenlernen als den Vertrauenswürdigkeitsfaktor beziehen, und
eine Identifikationsschaltung, die dazu ausgelegt ist, auf Basis der erfassten Qualität einer Vertrauenswürdigkeit von künstlicher Intelligenz oder Maschinenlernen die zweite Netzwerkentität zu identifizieren, wobei
die erste Nachricht, die sich auf eine Vertrauenswürdigkeit von künstlicher Intelligenz oder Maschinenlernen bezieht, eine Anforderung von Informationen zu einer Vertrauenswürdigkeitserklärbarkeitsfähigkeit ist, und
die zweite Nachricht, die sich auf eine Vertrauenswürdigkeit von künstlicher Intelligenz oder Maschinenlernen bezieht, eine Antwort auf Informationen zu einer Vertrauenswürdigkeitserklärbarkeitsfähigkeit ist, und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

3. Vorrichtung nach Anspruch 2, wobei
der mindestens eine erste Parameter, der sich auf eine Modellerklärbarkeit von künstlicher Intelligenz oder Maschinenlernen bezieht, eine Liste beinhaltet, die einen Umfang einer kognitiven Netzwerkfunktion anzeigt, und
der mindestens eine zweite Parameter, der sich auf eine Modellerklärbarkeit von künstlicher Intelligenz oder Maschinenlernen bezieht, mindestens eines von Folgendem umfasst
eine Liste, die unterstützte Modellerklärungsverfahren für künstliche Intelligenz oder Maschinenlernen anzeigt,
eine Liste, die unterstützte Modellerklärbarkeitsmetriken für künstliche Intelligenz oder Maschinenlernen anzeigt, und
eine Liste, die unterstützte Längen von Modellerklärungsaggregationsperioden für künstliche Intelligenz oder Maschinenlernen anzeigt.

4. Vorrichtung nach Anspruch 1, die ferner Folgendes umfasst
eine Bestimmungsschaltung, die dazu ausgelegt ist, auf Basis von erfassten Fähigkeitsinformationen mit Bezug auf eine Modellerklärbarkeit von künstlicher Intelligenz oder Maschinenlernen als den Vertrauenswürdigkeitsfaktor zu bestimmen, ob Anforderungen, die sich auf die Modellerklärbarkeit von künstlicher Intelligenz oder Maschinenlernen als den Vertrauenswürdigkeitsfaktor beziehen, erfüllt werden können, wobei
die erste Nachricht, die sich auf eine Vertrauenswürdigkeit von künstlicher Intelligenz oder Maschinenlernen bezieht, eine Auslegungsanforderung einer Vertrauenswürdigkeitserklärbarkeit ist, und
die zweite Nachricht, die sich auf eine Vertrauenswürdigkeit von künstlicher Intelligenz oder Maschinenlernen bezieht, eine Auslegungsantwort zu einer Vertrauenswürdigkeitserklärbarkeit ist.

5. Vorrichtung nach Anspruch 4, wobei
der mindestens eine erste Parameter, der sich auf eine Modellerklärbarkeit von künstlicher Intelligenz oder Maschinenlernen bezieht, mindestens eines von Folgendem umfasst
eine Liste, die kognitive Netzwerkfunktionsinstanzen in einem Umfang einer kognitiven Netzwerkfunktion einer Sammelaufgabe für eine Modellerklärung für künstliche Intelligenz oder Maschinenlernen anzeigt,
Zustandsinformationen, die eine Aktivierung oder Deaktivierung der Sammelaufgabe für eine Modellerklärung für künstliche Intelligenz oder Maschinenlernen anzeigen,
Startzeitinformationen, die anzeigen, wann die Sammelaufgabe für eine Modellerklärung für künstliche Intelligenz oder Maschinenlernen gestartet wird,
Endzeitinformationen, die anzeigen, wann die Sammelaufgabe für eine Modellerklärung für künstliche Intelligenz oder Maschinenlernen beendet wird,
Aggregationsperiodeninformationen, die eine Modellerklärungsaggregationsperiodenlänge von künstlicher Intelligenz oder Maschinenlernen der Sammelaufgabe für eine Modellerklärung von künstlicher Intelligenz oder Maschinenlernen anzeigen,
Haltezeitinformationen, die anzeigen, für wie lange Modellerklärungen von künstlicher Intelligenz oder Maschinenlernen, die aus der Sammelaufgabe für eine Modellerklärung von künstlicher Intelligenz oder Maschinenlernen resultieren, zu speichern sind,
Verfahrensinformationen, die ein Modellerklärungsverfahren für künstliche Intelligenz oder Maschinenlernen anzeigen, das für die Sammelaufgabe für eine Modellerklärung für künstliche Intelligenz oder Maschinenlernen zu verwenden ist, und
Filterinformationen, die mindestens eine Art von Modellerklärungen von künstlicher Intelligenz oder Maschinenlernen anzeigen, die von der Sammelaufgabe für eine Modellerklärung von künstlicher Intelligenz oder Maschinenlernen zu sammeln sind.

6. Vorrichtung nach Anspruch 1, die ferner Folgendes umfasst
eine Bestimmungsschaltung, die dazu ausgelegt ist, die zweite Netzwerkentität auf Basis von einem erfassten Bedarf an Vertrauenswürdigkeitsinformationen mit Bezug auf eine Modellerklärbarkeit von künstlicher Intelligenz oder Maschinenlernen als den Vertrauenswürdigkeitsfaktor zu bestimmen, wobei
die erste Nachricht, die sich auf eine Vertrauenswürdigkeit von künstlicher Intelligenz oder Maschinenlernen bezieht, eine Abfrageanforderung einer Vertrauenswürdigkeitserklärbarkeit ist und
die zweite Nachricht, die sich auf eine Vertrauenswürdigkeit von künstlicher Intelligenz oder Maschinenlernen bezieht, eine Abfrageantwort zu einer Vertrauenswürdigkeitserklärbarkeit ist und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

7. Vorrichtung nach Anspruch 6, wobei
der mindestens eine erste Parameter, der sich auf eine Modellerklärbarkeit von künstlicher Intelligenz oder Maschinenlernen bezieht, mindestens eines von Folgendem umfasst
eine Liste, die kognitive Netzwerkfunktionsinstanzen in einem Umfang einer kognitiven Netzwerkfunktion einer Abfrage für eine Modellerklärung von künstlicher Intelligenz oder Maschinenlernen anzeigt,
Startzeitinformationen, die einen Anfang eines Zeitrahmens anzeigen, für den Modellerklärungen von künstlicher Intelligenz oder Maschinenlernen mit der Abfrage für eine Modellerklärung von künstlicher Intelligenz oder Maschinenlernen abgefragt werden, und
Endzeitinformationen, die ein Ende des Zeitrahmens anzeigen, für den Modellerklärungen von künstlicher Intelligenz oder Maschinenlernen mit der Abfrage für eine Modellerklärung von künstlicher Intelligenz oder Maschinenlernen abgefragt werden, und
der mindestens eine zweite Parameter, der sich auf eine Modellerklärbarkeit von künstlicher Intelligenz oder Maschinenlernen bezieht, mindestens eines von Folgendem umfasst
Zeitinformationen, die anzeigen, wann Schlüsselleistungsindikatoren gemeldet wurden, die für eine Modellerklärung von künstlicher Intelligenz oder Maschinenlernen berücksichtigt wurden,
kognitive Netzwerkfunktionsinformationen, die mindestens eine kognitive Netzwerkfunktion anzeigen, von der die Schlüsselleistungsindikatoren gemeldet wurden, die für die Modellerklärung von künstlicher Intelligenz oder Maschinenlernen berücksichtigt wurden, und
eine Liste, die eine Vielzahl von Entscheidungsklassifizierungen und eine Anzahl von Entscheidungen pro Entscheidungsklassifizierung anzeigt.

8. Vorrichtung nach Anspruch 1, die ferner Folgendes umfasst
eine Bestimmungsschaltung, die dazu ausgelegt ist, die zweite Netzwerkentität auf Basis von einem erfassten Bedarf an Vertrauenswürdigkeitsinformationen mit Bezug auf eine Modellerklärbarkeit von künstlicher Intelligenz oder Maschinenlernen als den Vertrauenswürdigkeitsfaktor zu bestimmen, wobei
die erste Nachricht, die sich auf eine Vertrauenswürdigkeit von künstlicher Intelligenz oder Maschinenlernen bezieht, eine Subskription von Vertrauenswürdigkeitserklärbarkeit ist, und
die zweite Nachricht, die sich auf eine Vertrauenswürdigkeit von künstlicher Intelligenz oder Maschinenlernen bezieht, eine Benachrichtigung über eine Vertrauenswürdigkeitserklärbarkeit ist, und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

9. Vorrichtung nach Anspruch 8, wobei
der mindestens eine erste Parameter, der sich auf eine Modellerklärbarkeit von künstlicher Intelligenz oder Maschinenlernen bezieht, mindestens eines von Folgendem umfasst
eine Liste, die Instanzen einer kognitiven Netzwerkfunktion in einem Umfang einer kognitiven Netzwerkfunktion einer Abfrage für eine Modellerklärung von künstlicher Intelligenz oder Maschinenlernen anzeigt, und
Filterinformationen, die Filterkriterien für eine Subskription mit Bezug auf die Abfrage einer Modellerklärung von künstlicher Intelligenz oder Maschinenlernen anzeigen, und
der mindestens eine zweite Parameter, der sich auf eine Modellerklärbarkeit von künstlicher Intelligenz oder Maschinenlernen bezieht, mindestens eines von Folgendem umfasst
Zeitinformationen, die anzeigen, wann Schlüsselleistungsindikatoren gemeldet wurden, die für eine Modellerklärung von künstlicher Intelligenz oder Maschinenlernen berücksichtigt wurden,
kognitive Netzwerkfunktionsinformationen, die mindestens eine kognitive Netzwerkfunktion anzeigen, von der die Schlüsselleistungsindikatoren gemeldet wurden, die für die Modellerklärung von künstlicher Intelligenz oder Maschinenlernen berücksichtigt wurden, und
eine Liste, die eine Vielzahl von Entscheidungsklassifizierungen und eine Anzahl von Entscheidungen pro Entscheidungsklassifizierung anzeigt.

10. Vorrichtung einer zweiten Netzwerkentität, die eine Vertrauenswürdigkeit von künstlicher Intelligenz oder Maschinenlernen in einer Pipeline für künstliche Intelligenz oder Maschinenlernen in einem Netzwerk verwaltet, wobei die Vorrichtung Folgendes umfasst
eine Empfangsschaltung, die dazu ausgelegt ist, von einer ersten Netzwerkentität, die eine Vertrauenswürdigkeit von künstlicher Intelligenz oder Maschinenlernen in einem Netzwerk verwaltet, eine erste Nachricht zu empfangen, die sich auf eine Vertrauenswürdigkeit von künstlicher Intelligenz oder Maschinenlernen bezieht, und
eine Übertragungsschaltung, die dazu ausgelegt ist, eine zweite Nachricht, die sich auf eine Vertrauenswürdigkeit von künstlicher Intelligenz oder Maschinenlernen bezieht, zur zweiten Netzwerkentität zu übertragen, wobei
sich die erste Nachricht über eine Vertrauenswürdigkeit von künstlicher Intelligenz oder Maschinenlernen auf eine Modellerklärbarkeit von künstlicher Intelligenz oder Maschinenlernen als einen Vertrauenswürdigkeitsfaktor von Vertrauenswürdigkeitsfaktoren bezieht, die mindestens eine Modellfairness für künstliche Intelligenz oder Maschinenlernen, eine Modellerklärbarkeit für künstliche Intelligenz oder Maschinenlernen und eine Modellrobustheit für künstliche Intelligenz oder Maschinenlernen beinhalten,
sich die zweite Nachricht über eine Vertrauenswürdigkeit von künstlicher Intelligenz oder Maschinenlernen auf eine Modellerklärbarkeit von künstlicher Intelligenz oder Maschinenlernen als den Vertrauenswürdigkeitsfaktor bezieht und
die erste Nachricht über eine Vertrauenswürdigkeit von künstlicher Intelligenz oder Maschinenlernen ein erstes Informationselement umfasst, das mindestens einen ersten Parameter beinhaltet, der sich auf die Modellerklärbarkeit für künstliche Intelligenz oder Maschinenlernen bezieht.

11. Vorrichtung nach Anspruch 10, wobei
die erste Nachricht, die sich auf eine Vertrauenswürdigkeit von künstlicher Intelligenz oder Maschinenlernen bezieht, eine Anforderung von Informationen zu einer Vertrauenswürdigkeitserklärbarkeitsfähigkeit ist, und
die zweite Nachricht, die sich auf eine Vertrauenswürdigkeit von künstlicher Intelligenz oder Maschinenlernen bezieht, eine Antwort auf Informationen zu einer Vertrauenswürdigkeitserklärbarkeitsfähigkeit ist, und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

12. Vorrichtung nach Anspruch 10, wobei
die erste Nachricht, die sich auf eine Vertrauenswürdigkeit von künstlicher Intelligenz oder Maschinenlernen bezieht, eine Auslegungsanforderung einer Vertrauenswürdigkeitserklärbarkeit ist, und
die zweite Nachricht, die sich auf eine Vertrauenswürdigkeit von künstlicher Intelligenz oder Maschinenlernen bezieht, eine Auslegungsantwort zu einer Vertrauenswürdigkeitserklärbarkeit ist.

13. Vorrichtung nach Anspruch 10, wobei
die erste Nachricht, die sich auf eine Vertrauenswürdigkeit von künstlicher Intelligenz oder Maschinenlernen bezieht, eine Abfrageanforderung einer Vertrauenswürdigkeitserklärbarkeit ist, und
die zweite Nachricht, die sich auf eine Vertrauenswürdigkeit von künstlicher Intelligenz oder Maschinenlernen bezieht, eine Abfrageantwort zu einer Vertrauenswürdigkeitserklärbarkeit ist, und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

14. Vorrichtung nach Anspruch 10, wobei
die erste Nachricht, die sich auf eine Vertrauenswürdigkeit von künstlicher Intelligenz oder Maschinenlernen bezieht, eine Subskription von Vertrauenswürdigkeitserklärbarkeit ist, und
die zweite Nachricht, die sich auf eine Vertrauenswürdigkeit von künstlicher Intelligenz oder Maschinenlernen bezieht, eine Benachrichtigung über eine Vertrauenswürdigkeitserklärbarkeit ist, und
die zweite Nachricht über eine Vertrauenswürdigkeit von künstlicher Intelligenz oder Maschinenlernen ein zweites Informationselement umfasst, das mindestens einen zweiten Parameter beinhaltet, der sich auf die Modellerklärbarkeit von künstlicher Intelligenz oder Maschinenlernen bezieht.

## Revendications

1. Appareil d'une première entité de réseau gérant la fiabilité d'intelligence artificielle ou d'apprentissage machine dans un réseau, l'appareil comprenant
une circuiterie d'émission configurée pour émettre un premier message relatif à la fiabilité d'intelligence artificielle ou d'apprentissage machine vers une deuxième entité de réseau gérant la fiabilité d'intelligence artificielle ou d'apprentissage machine dans un pipeline d'intelligence artificielle ou d'apprentissage machine dans ledit réseau, et
une circuiterie de réception configurée pour recevoir un deuxième message relatif à la fiabilité d'intelligence artificielle ou d'apprentissage machine à partir de ladite deuxième entité de réseau, dans lequel
ledit premier message relatif à la fiabilité d'intelligence artificielle ou d'apprentissage machine est lié à l'explicabilité du modèle d'intelligence artificielle ou d'apprentissage machine en tant que facteur de fiabilité parmi des facteurs de fiabilité comportant au moins l'équité du modèle d'intelligence artificielle ou d'apprentissage machine, l'explicabilité du modèle d'intelligence artificielle ou d'apprentissage machine, et la robustesse du modèle d'intelligence artificielle ou d'apprentissage machine,
ledit deuxième message relatif à la fiabilité d'intelligence artificielle ou d'apprentissage machine est lié à l'explicabilité du modèle d'intelligence artificielle ou d'apprentissage machine en tant que ledit facteur de fiabilité, et
ledit premier message relatif à la fiabilité d'intelligence artificielle ou d'apprentissage machine comprend un premier élément d'information comportant au moins un premier paramètre lié à l'explicabilité du modèle d'intelligence artificielle ou d'apprentissage machine.

2. Appareil selon la revendication 1, comprenant en outre
une circuiterie de traduction configurée pour traduire la qualité de fiabilité d'intelligence artificielle ou d'apprentissage machine acquise en exigences relatives à l'explicabilité du modèle d'intelligence artificielle ou d'apprentissage machine en tant que ledit facteur de fiabilité, et
une circuiterie d'identification configurée pour identifier ladite deuxième entité de réseau sur la base de ladite qualité de fiabilité d'intelligence artificielle ou d'apprentissage machine acquise, dans lequel
ledit premier message relatif à la fiabilité d'intelligence artificielle ou d'apprentissage machine est une demande d'informations de capacité d'explicabilité de fiabilité, et
ledit deuxième message relatif à la fiabilité d'intelligence artificielle ou d'apprentissage machine est une réponse d'informations de capacité d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.

3. Appareil selon la revendication 2, dans lequel
ledit au moins un premier paramètre lié à l'explicabilité du modèle d'intelligence artificielle ou d'apprentissage machine comporte une liste indiquant une portée de fonction de réseau cognitif, et
ledit au moins un deuxième paramètre lié à l'explicabilité du modèle d'intelligence artificielle ou d'apprentissage machine comporte au moins l'une parmi
une liste indiquant des méthodes d'explication de modèle d'intelligence artificielle ou d'apprentissage machine prises en charge,
une liste indiquant des métriques d'explicabilité du modèle d'intelligence artificielle ou d'apprentissage machine prises en charge, et
une liste indiquant des durées de périodes d'agrégation d'explication de modèle d'intelligence artificielle ou d'apprentissage machine prises en charge.

4. Appareil selon la revendication 1, comprenant en outre
une circuiterie de détermination configurée pour déterminer, sur la base d'informations de capacité acquises en ce qui concerne l'explicabilité du modèle d'intelligence artificielle ou d'apprentissage machine en tant que ledit facteur de fiabilité, si les exigences liées à l'explicabilité du modèle d'intelligence artificielle ou d'apprentissage machine en tant que ledit facteur de fiabilité peuvent être satisfaites, dans lequel
ledit premier message relatif à la fiabilité d'intelligence artificielle ou d'apprentissage machine est une demande de configuration d'explicabilité de fiabilité, et
ledit deuxième message relatif à la fiabilité d'intelligence artificielle ou d'apprentissage machine est une réponse de configuration d'explicabilité de fiabilité.

5. Appareil selon la revendication 4, dans lequel
ledit au moins un premier paramètre lié à l'explicabilité du modèle d'intelligence artificielle ou d'apprentissage machine comporte au moins une parmi
une liste indiquant des instances de fonctions de réseaux cognitifs dans une portée de fonction de réseau cognitif d'un travail de collecte d'explications de modèle d'intelligence artificielle ou d'apprentissage machine,
des informations d'état indiquant l'activation ou l'inactivation dudit travail de collecte d'explications de modèle d'intelligence artificielle ou d'apprentissage machine,
des informations d'heure de lancement indiquant le moment où ledit travail de collecte d'explications de modèle d'intelligence artificielle ou d'apprentissage machine est lancé,
des informations d'heure d'arrêt indiquant le moment où ledit travail de collecte d'explications de modèle d'intelligence artificielle ou d'apprentissage machine est arrêté,
des informations de période d'agrégation indiquant une durée de période d'agrégation d'explication de modèle d'intelligence artificielle ou d'apprentissage machine dudit travail de collecte d'explications de modèle d'intelligence artificielle ou d'apprentissage machine,
des d'informations de temps de conservation indiquant la durée pendant laquelle il faut stocker les explications de modèle d'intelligence artificielle ou d'apprentissage machine résultant dudit travail de collecte d'explications de modèle d'intelligence artificielle ou d'apprentissage machine,
des informations de méthode indiquant une méthode d'explication de modèle d'intelligence artificielle ou d'apprentissage machine à utiliser pour ledit travail de collecte d'explications de modèle d'intelligence artificielle ou d'apprentissage machine, et
des informations de filtre indiquant au moins un type d'explications de modèle d'intelligence artificielle ou d'apprentissage machine à collecter par ledit travail de collecte d'explications de modèle d'intelligence artificielle ou d'apprentissage machine.

6. Appareil selon la revendication 1, comprenant en outre
une circuiterie de détermination configurée pour déterminer ladite deuxième entité de réseau sur la base d'une exigence d'informations de fiabilité acquise en ce qui concerne l'explicabilité du modèle d'intelligence artificielle ou d'apprentissage machine en tant que ledit facteur de fiabilité, dans lequel
ledit premier message relatif à la fiabilité d'intelligence artificielle ou d'apprentissage machine est une demande de requête d'explicabilité de fiabilité, et
ledit deuxième message relatif à la fiabilité d'intelligence artificielle ou d'apprentissage machine est une réponse de requête d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.

7. Appareil selon la revendication 6, dans lequel
ledit au moins un premier paramètre lié à l'explicabilité du modèle d'intelligence artificielle ou d'apprentissage machine comporte au moins l'une parmi
une liste indiquant des instances de fonctions de réseaux cognitifs dans une portée de fonction de réseau cognitif d'une requête d'explication de modèle d'intelligence artificielle ou d'apprentissage machine,
des informations d'heure de lancement indiquant le début d'un délai pour lequel des explications de modèle d'intelligence artificielle ou d'apprentissage machine sont demandées par ladite requête d'explication de modèle d'intelligence artificielle ou d'apprentissage machine, et
des informations d'heure d'arrêt indiquant la fin dudit délai pour lequel des explications de modèle d'intelligence artificielle ou d'apprentissage machine sont demandées par ladite requête d'explication de modèle d'intelligence artificielle ou d'apprentissage machine, et
ledit au moins un deuxième paramètre lié à l'explicabilité du modèle d'intelligence artificielle ou d'apprentissage machine comporte au moins l'une parmi
des informations temporelles indiquant le moment où des indicateurs clés de performance considérés pour une explication de modèle d'intelligence artificielle ou d'apprentissage machine ont été signalés,
des informations de fonction de réseau cognitif indiquant au moins une fonction de réseau cognitif à partir de laquelle lesdits indicateurs clés de performance considérés pour ladite explication de modèle d'intelligence artificielle ou d'apprentissage machine ont été signalés, et
une liste indiquant une pluralité de classifications de décisions et un nombre de décisions par classification de décisions.

8. Appareil selon la revendication 1, comprenant en outre
une circuiterie de détermination configurée pour déterminer ladite deuxième entité de réseau sur la base d'une exigence d'informations de fiabilité acquise en ce qui concerne l'explicabilité du modèle d'intelligence artificielle ou d'apprentissage machine en tant que ledit facteur de fiabilité, dans lequel
ledit premier message relatif à la fiabilité d'intelligence artificielle ou d'apprentissage machine est une souscription d'explicabilité de fiabilité, et
ledit deuxième message relatif à la fiabilité d'intelligence artificielle ou d'apprentissage machine est une notification d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.

9. Appareil selon la revendication 8, dans lequel
ledit au moins un premier paramètre lié à l'explicabilité du modèle d'intelligence artificielle ou d'apprentissage machine comporte au moins l'une parmi
une liste indiquant des instances de fonctions de réseaux cognitifs dans une portée de fonction de réseau cognitif d'une requête d'explication de modèle d'intelligence artificielle ou d'apprentissage machine, et
des informations de filtre indiquant des critères de filtre pour une souscription en ce qui concerne ladite requête d'explication de modèle d'intelligence artificielle ou d'apprentissage machine, et
ledit au moins un deuxième paramètre lié à l'explicabilité du modèle d'intelligence artificielle ou d'apprentissage machine comporte au moins l'une parmi
des informations temporelles indiquant le moment où des indicateurs clés de performance considérés pour une explication de modèle d'intelligence artificielle ou d'apprentissage machine ont été signalés,
des informations de fonction de réseau cognitif indiquant au moins une fonction de réseau cognitif à partir de laquelle lesdits indicateurs clés de performance considérés pour ladite explication de modèle d'intelligence artificielle ou d'apprentissage machine ont été signalés, et
une liste indiquant une pluralité de classifications de décisions et un nombre de décisions par classification de décisions.

10. Appareil d'une deuxième entité de réseau gérant la fiabilité d'intelligence artificielle ou d'apprentissage machine dans un pipeline d'intelligence artificielle ou d'apprentissage machine dans un réseau, l'appareil comprenant
une circuiterie de réception configurée pour recevoir un premier message relatif à la fiabilité d'intelligence artificielle ou d'apprentissage machine à partir d'une première entité de réseau gérant la fiabilité d'intelligence artificielle ou d'apprentissage machine dans ledit réseau, et
une circuiterie d'émission configurée pour émettre un deuxième message relatif à la fiabilité d'intelligence artificielle ou d'apprentissage machine vers ladite première entité de réseau, dans lequel
ledit premier message relatif à la fiabilité d'intelligence artificielle ou d'apprentissage machine est lié à l'explicabilité du modèle d'intelligence artificielle ou d'apprentissage machine en tant que facteur de fiabilité parmi des facteurs de fiabilité comportant au moins l'équité du modèle d'intelligence artificielle ou d'apprentissage machine, l'explicabilité du modèle d'intelligence artificielle ou d'apprentissage machine, et la robustesse du modèle d'intelligence artificielle ou d'apprentissage machine,
ledit deuxième message relatif à la fiabilité d'intelligence artificielle ou d'apprentissage machine est lié à l'explicabilité du modèle d'intelligence artificielle ou d'apprentissage machine en tant que ledit facteur de fiabilité, et
ledit premier message relatif à la fiabilité d'intelligence artificielle ou d'apprentissage machine comprend un premier élément d'information comportant au moins un premier paramètre lié à l'explicabilité du modèle d'intelligence artificielle ou d'apprentissage machine.

11. Appareil selon la revendication 10, dans lequel
ledit premier message relatif à la fiabilité d'intelligence artificielle ou d'apprentissage machine est une demande d'informations de capacité d'explicabilité de fiabilité, et
ledit deuxième message relatif à la fiabilité d'intelligence artificielle ou d'apprentissage machine est une réponse d'informations de capacité d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.

12. Appareil selon la revendication 10, dans lequel
ledit premier message relatif à la fiabilité d'intelligence artificielle ou d'apprentissage machine est une demande de configuration d'explicabilité de fiabilité, et ledit deuxième message relatif à la fiabilité d'intelligence artificielle ou d'apprentissage machine est une réponse de configuration d'explicabilité de fiabilité.

13. Appareil selon la revendication 10, dans lequel
ledit premier message relatif à la fiabilité d'intelligence artificielle ou d'apprentissage machine est une demande de requête d'explicabilité de fiabilité, et
ledit deuxième message relatif à la fiabilité d'intelligence artificielle ou d'apprentissage machine est une réponse de requête d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.

14. Appareil selon la revendication 10, dans lequel
ledit premier message relatif à la fiabilité d'intelligence artificielle ou d'apprentissage machine est une souscription d'explicabilité de fiabilité, et
ledit deuxième message relatif à la fiabilité d'intelligence artificielle ou d'apprentissage machine est une notification d'explicabilité de fiabilité, et
ledit deuxième message relatif à la fiabilité d'intelligence artificielle ou d'apprentissage machine comprend un deuxième élément d'information comportant au moins un deuxième paramètre lié à l'explicabilité du modèle d'intelligence artificielle ou d'apprentissage machine.
